(19) Europäisches Patentamt
European Patent Office
Office européen des brevets

(11) **EP 2 362 705 A1**

(12) **EUROPEAN PATENT APPLICATION**
published in accordance with Art. 153(4) EPC

(43) Date of publication:
**31.08.2011 Bulletin 2011/35**

(51) Int Cl.:
*H04W 72/08* (2009.01)   *H04W 4/06* (2009.01)

(21) Application number: **08878440.0**

(22) Date of filing: **28.11.2008**

(86) International application number:
**PCT/JP2008/071733**

(87) International publication number:
**WO 2010/061483 (03.06.2010 Gazette 2010/22)**

(84) Designated Contracting States:
**AT BE BG CH CY CZ DE DK EE ES FI FR GB GR HR HU IE IS IT LI LT LU LV MC MT NL NO PL PT RO SE SI SK TR**

(71) Applicant: **Fujitsu Limited**
**Kawasaki-shi, Kanagawa 211-8588 (JP)**

(72) Inventor: **KATORI, Masato**
**Kawasaki-shi**
**Kanagawa 211-8588 (JP)**

(74) Representative: **Holz, Ulrike**
**Haseltine Lake LLP**
**Lincoln House, 5th Floor**
**300 High Holborn**
**London WC1V 7JH (GB)**

(54) **WIRELESS COMMUNICATION APPARATUS, WIRELESS COMMUNICATION SYSTEM, AND COMMUNICATION MODE SWITCHING METHOD**

(57)    In a radio communication system, when switching of a multicast communication and a unicast communication is performed, a radio communication base station determines whether to switch a communication mode based on reception information received from a mobile terminal, newly establishes a logical channel between the mobile terminal and the radio communication base station by the same logical channel as before switching based on the determination result, converts to a transport channel of a communication mode different from before switching in the newly established logical channel, and switches communication with each mobile terminal to a communication mode represented by the converted transport channel. Thus, switching of the communication mode is performed limitedly only in between the radio communication base station and each mobile terminal. As a result, each mobile terminal does not request a core network to switch the communication mode, and switching of the multicast communication or the unicast communication is performed only between the radio communication base station and each mobile terminal. Accordingly, the ineffective use of the radio resource can be prevented.

FIG.3

EP 2 362 705 A1

**Description**

TECHNICAL FIELD

The present invention relates to radio communication between a radio communication apparatus and a mobile terminal. Further, the present invention relates to providing each mobile terminal with various communication services by switching various communication modes through a radio communication apparatus.

BACKGROUND ART

In recent years, as a radio communication system has been diversified and complicated and a mobile terminal such as a cellular phone has been spread, there has been a shortage of a radio resource such as an available frequency band. In a next generation mobile communication system, as an example of a method of effectively utilizing the limited radio resource, studies on multicast communication in which a radio base station transmits the same information to a plurality of mobile terminals have been broadly conducted.

The multicast communication is a means capable of effectively utilizing the limited radio resource. However, since broadcasting is performed regardless of a change in communication quality of each mobile terminal, broadcasting is performed under the same communication condition as before a change in reception condition even on a mobile terminal in which a radio environment of a certain mobile terminal changes due to a shielding object such as buildings and the reception quality extremely gets worse. As a result, due to influence of noise, interference, or the like, there has been a case in which a reception failure occurs.

For this reason, devised is a technique of increasing reliability by using multicast communication or unicast communication of 1:1 concurrently. According to this technique, a mobile terminal requests a core network (that corresponds to a higher node of a base station) to switch a communication mode related to content data to be received according to a communication state of the mobile terminal.

Patent Document 1: Japanese Laid-release Patent Publication No. 2006-333182.

DISCLOSURE OF INVENTION

PROBLEM TO BE SOLVED BY THE INVENTION

However, in the above described conventional technique, since the mobile terminal requests switching of the communication mode according to a received radio wave strength, there has been a problem in that it is impossible to realize an effective use of the radio resource of the whole base station in which a radio resource use status of other mobile terminals inside the same base station is considered.

For example, if each mobile terminal under multicasting acquires radio wave strength information from content data received from the base station and determines that an optimum communication mode is the unicast communication mode based on the acquired information, each mobile terminal requests the core network to switch to the unicast communication via the base station at the time of next-time content reception start.

Meanwhile, when each mobile terminal that is unicasting determines that an optimum communication mode is the multicast communication, each mobile communication requests the core network to switch to the multicast communication via the base station at the time of next-time content reception start.

For example, in the multicast communication, when the mobile terminal gets away from a base station antenna while receiving the same content and so the radio wave quality gets worse, switching to the unicast communication cannot be performed, and the communication quality may not be maintained. On the other hand, in the unicast communication, although the radio wave quality gets better while receiving the content, switching to the multicast communication cannot be performed, and efficiency of the radio resource cannot improve.

Therefore, since each mobile terminal determines and changes the communication mode thereof, the number of terminals that perform the unicast communication increases as a result, and thus there has been a problem in that an effective use of the radio resource could not be achieved.

The present invention is made to solve the above described problems of the conventional technique and aims to provide a radio communication apparatus, a radio communication system, and a method of switching a communication mode which are capable of preventing an ineffective use of the radio resource.

MEANS FOR SOLVING PROBLEM

To solve the above problems and achieve the object, a radio communication apparatus disclosed in this application requires to include a determination unit that determines whether to perform switching from a first communication mode to a second communication mode based on communication information used in communication between a mobile terminal and a radio communication apparatus; a logical channel establishment unit that newly establishes a logical channel by using a first logical channel corresponding to the first communication mode as a second logical channel corresponding to the second communication mode, based on a determination result of the determination unit; a transport channel conversion unit that converts a transport channel of the second logical channel from a first transport channel corresponding to the first communication mode to a second transport channel corresponding to the second communication mode; and a communication switching unit that switches to the second communication mode using the second logical channel and the second transport channel.

EFFECT OF THE INVENTION

According to the radio communication apparatus disclosed in the present invention, switching of the communication mode is performed limitedly only in between a radio communication base station and each mobile terminal, without making a request for switching of the communication mode with respect to the core network. Thus, the ineffective use of the radio resource can be prevented.

BRIEF DESCRIPTION OF DRAWINGS

FIG. 1 is a diagram illustrating a system configuration according to a first embodiment.
FIG. 2 is a diagram for explaining an overview of a base station according to the first embodiment.
FIG. 3 is a block diagram illustrating a configuration of the base station according to the first embodiment.
FIG. 4 is a diagram illustrating an example of a terminal information management table.
FIG. 5 is a diagram illustrating an example of a reception quality management table.
FIG. 6 is a diagram illustrating an example of a radio resource management table.
FIG. 7 is a switching sequence to a unicast communication.
FIG. 8 is a re-switching sequence to a multicast communication.
FIG. 9 is a switching sequence in the case in which the reception quality degrades.
FIG. 10 is a sequence representing a hand-over to another base station.
FIG. 11 is a switching sequence conforming to a reduction in the number of terminals that are performing a multicast communication.
FIG. 12 is a diagram illustrating a hardware configuration that executes switching of a communication mode according to the first embodiment.

EXPLANATIONS OF LETTERS OR NUMERALS

50, 51 Cell
100a, 100b, 110a Base station
101 Reception unit
102 Reception information analysis unit
103 Storage unit
103a Terminal information management table
103b Reception quality management table
103c Radio resource management table
104 Communication control unit
104a Communication determination unit
104b Channel setting request unit
104c Radio resource calculation unit
104d Unicast switching instruction unit
104e Multicast switching instruction unit
104f Radio resource control unit
105 Baseband processing unit
105a MAC processing unit
105b Scheduler unit
105c HO processing unit

106 Radio unit
115a Logical channel unit
115b Logical channel establishment unit
115c Transport channel conversion unit
115d Channel information notification unit
150a, 150b Transceiving antenna
200 Core network
300a, 300b, 300c···, 301a, 301b, 301c··· Mobile terminal
400a Transport channel
400b Multicast radio channel
400c Unicast radio channel
500 Logical channel
600 Computer (radio communication base station)
601 Input device
602 Display
603 RAM
603a, 605a Various data
604 ROM
605 HDD
605b Communication control program
605c Baseband processing program
606 CPU
606a Communication control process
606b Baseband processing process
607 Communication switching control device
608 Transceiving device
609 Medium read device
610 Bus

BEST MODE(S) FOR CARRYING OUT THE INVENTION

Hereinafter, exemplary embodiments will be described in detail with reference to the accompanying drawings. In the following embodiments, a base station 100a will be described as an example of a radio communication apparatus. A description will be made in connection with a case in which a base station 110a performs communication with a plurality of mobile terminals including a mobile terminal 300a and the mobile terminal 300a, but the present invention is not limited to the following embodiments.

First Embodiment

Explanation of Terms

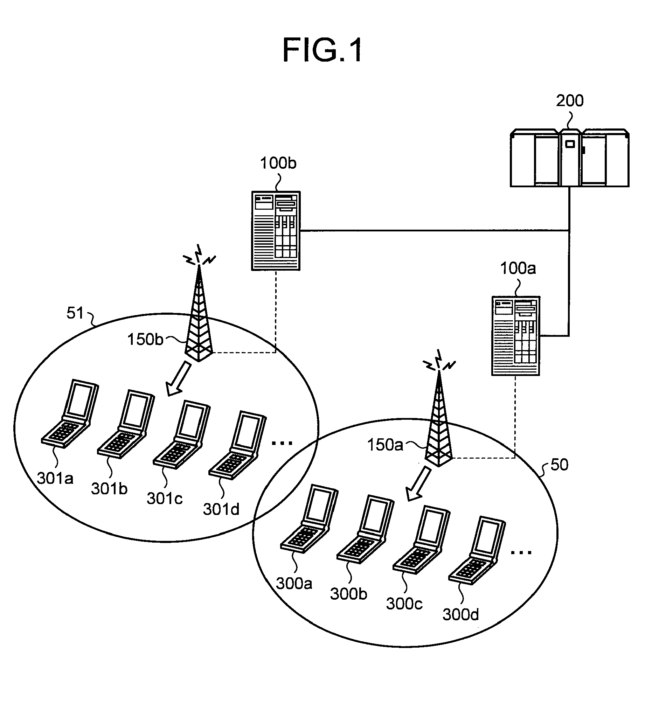

Major terms used in the following first embodiment will be first described. A "logical channel" generally represents a virtual line that connects two or more network nodes (for example, a plurality of mobile terminals) using a packet switching transmission line. In an interface protocol architecture for a radio communication, the logical channel is defined by a layer 3 (a network layer) and a layer 2 (a data link layer). In the present embodiment, the logical channel represents a virtual line through which a packet of multicast content data or the like is transmitted to each mobile terminal.
A "transport channel (TrCH)" is defined in communication between a layer 1 (a physical layer) and the layer 2, and a transport channel according to the present embodiment may include a multicast transport channel and a unicast transport channel.
Next, a system configuration that is a premise of the present embodiment will be described. FIG. 1 is a diagram illustrating a system configuration according to a first embodiment. FIG. 1 illustrates a case in which in a cell 50 in which multicast communication is being performed, a base station 100a transmits the same multicast content data from a core network 200 (hereinafter, it represents a higher node of the base station 100a) to a plurality of mobile terminals (300a, 300b, 300c, ...) using the same radio resource (for example, a radio frequency, a radio channel, or the like used by an antenna 150a).
Similarly, even in other cells (a cell 51, a cell 52, ...), each base station transmits the same multicast content data to each mobile terminal by the same radio resource possessed by its own station
Next, an overview of a base station according to the present embodiment will be described. The base station according to the present embodiment determines whether to perform switching to the multicast communication or the unicast communication, based on communication information that the base station receives from the mobile terminal when switching to the multicast communication or the unicast communication is performed.

Based on the determination result, the radio communication base station newly establishes the same logical channel related to a communication mode set before switching between each mobile terminal and the corresponding base station and converts a transport channel of the established logical channel from a transport channel corresponding to a communication mode set before switching to a transport channel corresponding to a communication mode of after switching. Then, by switching communication with each mobile terminal to a communication mode represented by the switched transport channel, switching of the communication mode is limited and performed between the base station and each mobile terminal.

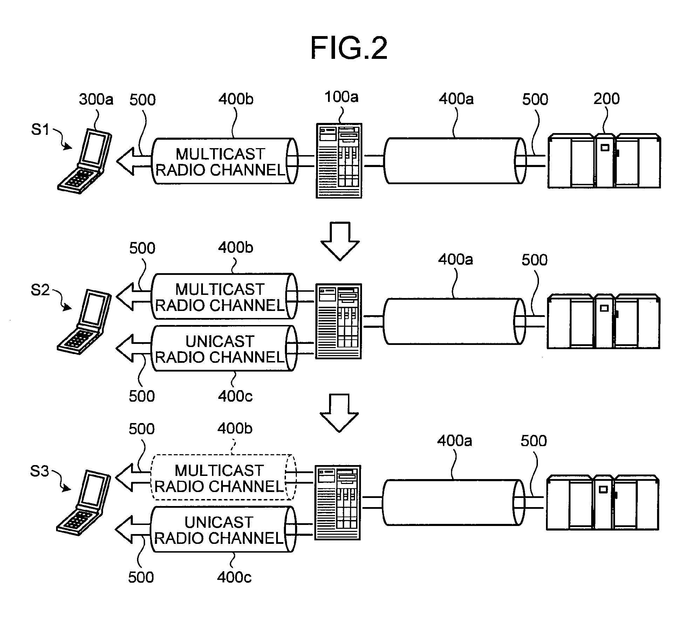

FIG. 2 is a diagram for explaining an overview of a base station according to the first embodiment. FIG. 2 illustrates a case in which among a plurality of mobile terminals and a plurality of base stations, the mobile terminal 300a and the base station 100a illustrated in FIG. 1 perform the multicast communication. A description will be made in connection with an example in which the base station 100a performs switching from the multicast communication to the unicast communication.

As illustrated in FIG. 2, radio communication is performed between the core network 200 and the base station 100a by a logical channel 500 and a transport channel 400a. Multicast communication is performed between the base station 100a and the mobile terminal 300a by the logical channel 500 and a multicast radio channel 400b (step S1).

The multicast radio channel illustrated in FIG. 2 represents an example of the transport channel, and a unicast radio channel also represents an example of the transport channel.

Next, based on a determination result of the base station 100a, the base station 100a newly establishes the logical channel 500 between its own station and the mobile terminal 300a as a unicast logical channel and converts the transport channel of the established logical channel 500 to a unicast radio channel 400c (step S2).

Next, the base station 100a and the mobile terminal 300a performs the unicast communication through the newly established logical channel 500 and the converted unicast radio channel 400c (step S3). Thereafter, the base station 100a stops transmitting multicast content data through the multicast radio channel 400b.

In FIG. 2, switching from the multicast communication to the unicast communication has been described as an example. However, in the case of switching the unicast communication to the multicast communication, in step S2, the base station 100a newly establishes the logical channel between the base station 100a and the mobile terminal 300a as the multicast logical channel and converts the transport channel of the established logical channel to the multicast radio channel.

As described above, the base station 100a changes the transport channel of the newly established same logical channel 500 from the multicast channel to the unicast channel (or from the unicast channel to the multicast channel), and thus switching of the communication mode can be limited to and performed in between the base station 100a and the mobile terminal 300a.

Thus, since the mobile terminal 300a does not request the core network 200 to switch the communication mode via the base station 100a, the efficiency of the radio resource may improve.

Further, since switching of the communication mode is limited to between the base station 100a and the mobile terminal 300a, switching of communication needs not be performed between the core network 200 and the base station 100a, and only multicast communication has to be performed between the base station 100a and the core network 200.

As a result, compared to the case in which switching between the unicast communication and the multicast communication is performed between the base station 100a and the core network 200, the radio resource of the base station 100a required for switching the communication mode can be saved.

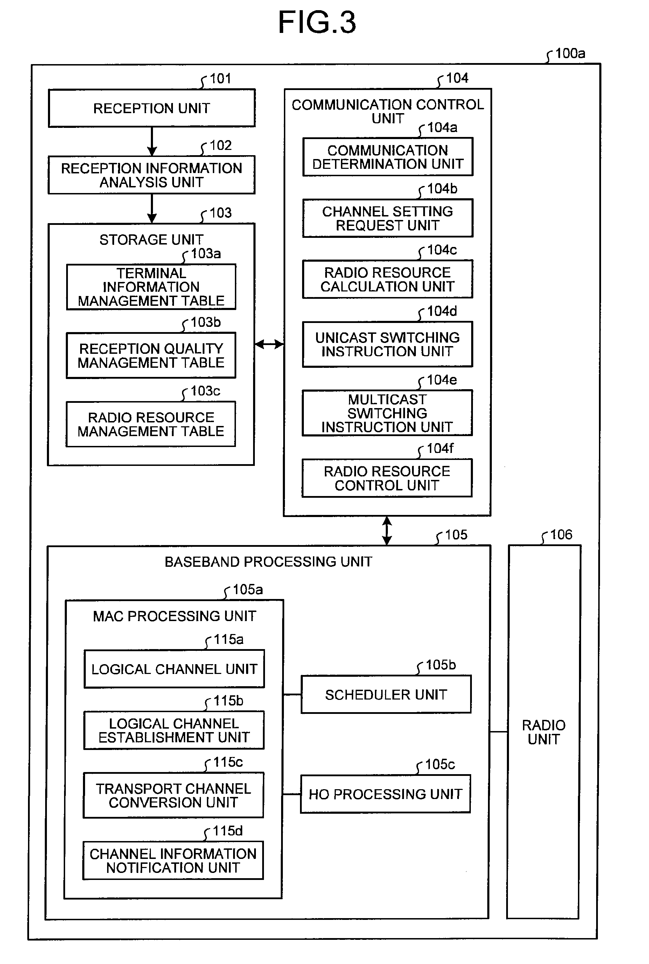

Next, a configuration of a base station according to the first embodiment will be described in connection with an example of the base station 100a. FIG. 3 is a block diagram illustrating a configuration of the base station according to the first embodiment. As illustrated in FIG. 3, the base station 100a includes a reception unit 101, a reception information analysis unit 102, a storage unit 103, a communication control unit 104, a baseband processing unit 105, and a radio unit 106.

The reception unit 101 is a means for receiving information representing reception power measurement, radio wave quality, or the like from each mobile terminal including the mobile terminal 300a through a transceiving antenna 150a (see FIG. 1) possessed by the base station 100a, and for outputting the received information to the reception information analysis unit 102.

The reception information analysis unit 102 is a means for analyzing the information received by the reception unit 101 and outputting the analyzed information to the storage unit 103. Examples of the output information may include information that represents information for identifying a communication mode of each mobile terminal and information that represents a modulation scheme.

The storage unit 103 is a means for storing information analyzed by the reception information analysis unit 102. The storage unit 103 includes a terminal information management table 103a, a reception quality management table 103b, and a radio resource management table 103c. Information of these various tables is updated by the communication control unit 104 and the baseband processing unit 105.

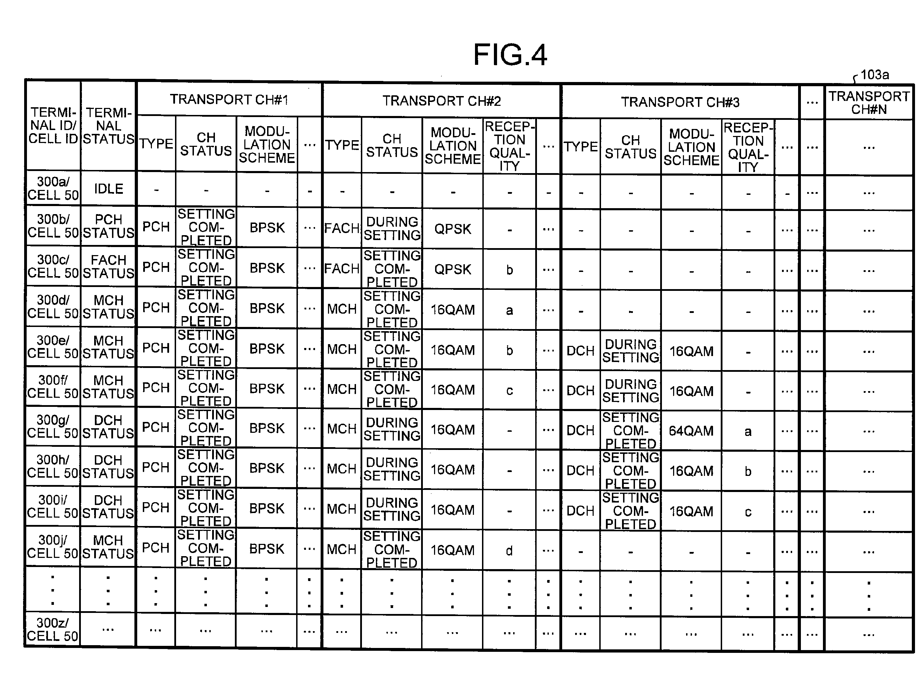

FIG. 4 is a diagram illustrating an example of the terminal information management table. As illustrated in FIG. 4, the terminal information management table 103a is a means for storing "terminal ID/cell ID", "terminal status", and "transport CH#1 to transport CH#N".

The "terminal ID/cell ID" represents identification information of each mobile terminal including the mobile terminal 300a and a cell of each mobile terminal. For example, "300a/cell 50" represents that identification information of a corresponding mobile terminal is "300a", and the mobile terminal 300a is performing the multicast communication or the unicast communication with the base station 100a in the "cell 50". Further, it is assumed that 300a, 300b, and 300c correspond to "terminal ID".

The "terminal status" represents a status of the transport channel of which "type" of "transport CH#1, transport CH#2, ..." possessed by each mobile terminal is set.

In the same mobile terminal, when a plurality of settings has been completed on "type" of each transport channel, it represents a status that setting of the "type" for the highest in identification number (a number following CH# of each transport) is completed.

Examples of the transport channel set to the "terminal status" may include a paging channel (PCH) status, a forward access channel (FACH) status, a dedicated channel (DCH) status, a multicast channel (MCH) status, and the like.

PCH represents the paging channel and is set when each mobile terminal and the base station 100a start communication. FCH represents the forward common access channel and is set after the setting of PCH. DCH represents that each mobile terminal is in a unicast communication status, and MCH represents that each mobile terminal is a multicast communication status.

The "transport CH#1, transport CH#2, ..." represent identification information of various transport channels possessed by each mobile terminal. In the present embodiment, for convenience, it is assumed that the transport CH#2 is the multicast communication transport channel, and the transport CH#3 is the unicast communication transport channel.

The "type" represents a type of each transport channel and includes PCH, FACH, DCH, and MCH.

As the "CH status", "setting completed" is set when setting of the transport channel set in the "type" has been completed, and "during setting" is set when setting is not completed yet. When communication between the base station 100a and each mobile terminal does not start, "idle" is stored.

A relationship between the "terminal status" and the "type" of the "transport CH#1, transport CH#2,..." will be described. Since the terminal status of a terminal ID 300a is "idle", it represents a status in which communication is not performed yet.

In a mobile terminal of a terminal ID 300b, PCH is in a status of "setting completed" for the transport CH#1, whereas "FACH" is in a status of "during setting" for the transport CH#2. Thus, the terminal status is a "PCH state" and so represents a status in which communication with the base station 100a has started.

In a mobile terminal of a terminal ID 300c, "PCH" and "FACH" are in a status of "setting completed", for the transport CH#1 and the transport CH#2, respectively. Thus, "FACH" that has been set to the "type" of the transport channel CH#2 that is the highest in identification number is a terminal status of the terminal ID 300c. This is a status in which the forward common channel has been set, and in this status, setting of the multicast communication or the unicast communication starts.

In a mobile terminal of a terminal ID 300d, "PCH" and "MCH" are in a status of "setting completed" for the transport CH#1 and the transport CH#2, respectively. Thus, "MCH" that has been set to the "type" of the transport channel CH#2 that is highest in identification number is a terminal status of the terminal ID 300d. This represents that the mobile terminal of the terminal ID 300d is performing the multicast communication.

In mobile terminals of terminal IDs 300e and 300f, "PCH" and "MCH" are in a status of "setting completed" for the transport CH#1 and the transport CH#2, respectively, whereas "DCH" is in a status of "during setting" for the transport CH#3. Thus, "MCH" that has been set to the "type" of the transport channel CH#2 that is highest in identification number is a terminal status of the terminal ID 300d. Similarly to the terminal ID 300d, it represents that the multicast communication is being performed.

In mobile terminals of terminal IDs 300g, 300h, and 300i, "PCH" and "DCH" are in a status of "setting completed" for the transport CH#1 and the transport CH#3, respectively, whereas "MCH" is in a status of "during setting" for the transport CH#2. Thus, "DCH" that has been set to the "type" of the transport channel CH#3 that is highest in identification number is a terminal status of the terminal IDs 300g, 300h, and 300i. Thus, it represents that the terminal IDs 300g, 300h, and 300i are performing the unicast communication.

In a terminal ID 300j, similarly to the terminal ID 300c, "MCH" that has been set to the "type" of the transport channel CH#2 that is highest in identification number a terminal status of the terminal ID 300j. Thus, it represents that the terminal ID 300j is performing the multicast communication.

In the "modulation scheme", a type of a digital modulation scheme used for communication between the base station 100a and each mobile terminal is registered for each of the transport CH#1 through the transport CH#N. In FIG.

4, as an example, a binary phase shift keying (BPSK), a quadrature phase shift keying (QPSK), a 16 quadrature amplitude modulation (QAM), or a 64 QAM, which are examples of a phase shift keying (PSK) modulation scheme, is registered.

That is, in the transport CH#1 of the terminal ID 300b, communication with the base station 100a has been started through the BPSK modulation scheme, and in the transport CH#2, setting of the forward common access channel is being performed between the terminal ID 300b and the base station 100a through the QPSK modulation scheme.

In the transport CH#1 of the terminal ID 300c, communication with the base station 100a has started through the BPSK modulation scheme, and in the transport CH#2, setting of the forward common access channel has been performed between the terminal ID 300c and the base station 100a through the QPSK modulation scheme.

In the transport CH1 of the terminal ID 300d, communication with the base station 100a has started through the BPSK modulation scheme, and in the transport CH2, the multicast communication with the base station 100a is being performed through the 16QAM modulation scheme.

In regard to terminal IDs 300e and 300f, in the transport CH#1, communication with the base station 100a has been started through the BPSK modulation scheme, and in the transport CH#2, the multicast communication is being performed with the base station 100a through the 16QAM modulation scheme.

Meanwhile, in the transport CH#3, setting of the unicast communication is being performed between the terminal IDs 300e and 300f and the base station 100a through the 16 QAM. Further, in the terminal IDs 300e and 300f, switching from the multicast communication to the unicast communication is being performed by an instruction of the communication control unit 104.

In the transport CH#1 of the terminal ID 300g, communication with the base station 100a has been started through the BPSK modulation scheme, and in the transport CH#2, setting of the multicast communication with the base station 100a is starting through the 16QAM modulation scheme.

Meanwhile, in the transport CH#3, the unicast communication is being performed through the 16 QAM, and in the terminal ID 300g, switching from the unicast communication to the multicast communication is being performed by an instruction of the communication control unit 104.

In the transport CH#1 of the terminal IDs 300h and 300i, communication with the base station 100a has been started through the BPSK modulation scheme, and in the transport CH#2, setting of the multicast communication is starting between the terminal IDs 300h and 300i and the base station 100a through the 16QAM modulation scheme.

Meanwhile, in the transport CH#3, the unicast communication with the base station 100a is being performed through the 16QAM, and in the terminal IDs 300h and 300i, switching from the unicast communication to the multicast communication is being performed by an instruction of the communication control unit 104.

In the transport CH#1 of the terminal ID 300j, communication with the base station 100a has been started through the BPSK modulation scheme, and in the transport CH#2, the multicast communication with the base station 100a is being performed through the 16QAM modulation scheme.

The "reception quality" represents the reception quality of each mobile terminal analyzed by the reception information analysis unit 102 and is registered according to a communication state of the transport channel that has been set to the "type" of each transport CH such as the transport CH#1, the transport CH#2, ..., or the like.

In the same mobile terminal, when a plurality of settings have been completed on the "type" of each transport CH, it is registered according to a communication state of the transport channel that has been set to the "type" that is highest in identification number (a number following CH# of each transport).

Thus, according to how good the reception quality is, "a", "b", or "c" is set. For example, "a" represents the reception quality of the best state. If the mobile terminal that has been performing the multicast communication represents "a", switching to the unicast communication caused due to the reception quality needs not be performed. Similarly, if the mobile terminal that has been performing the unicast communication represents "a", switching to the multicast communication caused due to the reception quality needs not be performed.

Further, in the case in which the reception quality is "b", it represents a status in which even if each mobile terminal performs switching to the multicast communication or the unicast communication, the reception quality is not influenced. Thus, if an administrator of the base station 100a gives priority to the effectiveness of the radio resource, it does not become a switching target of the communication mode. If priority is given to the reception quality, it becomes a switching target of the communication mode.

In the case in which the reception quality is "c", it represents the reception quality in which it is desirable to perform switching to the multicast communication or the unicast communication. If the mobile terminal that has been performing the multicast communication represents "c", it represents a state in which it is desirable to perform switching to the unicast communication. Meanwhile, if the mobile terminal that has been performing the unicast communication represents "c", it represents a state in which it is desirable to perform switching to the multicast communication.

In the case in which the reception quality is "d", it represents that the mobile terminal gets away from the base station 100a and gets out of a multicast service area of the base station 100a or a base station area in which time synchronization with the base station 100a can be made and a multicast service can be provided.

Generally, in the case in which a multicast service is implemented through a plurality of base stations, by making time synchronization between the base stations capable of carrying out the multicast service and transmitting the multicast content data using the same radio resource, the mobile terminal that performs the multicast communication can continue the multicast communication within the service area.

However, in the case in which the mobile terminal is in an area of a multicast non-support base station outside the service area or when the multicast service is provided by a single base station, if the mobile terminal gets out of the service area covered by the base station, the multicast communication cannot be continued, and thus the mobile terminal cannot receive the multicast content data.

Thus, the mobile terminal that cannot receive the multicast content data is difficult to perform the multicast communication, and thus the reception quality thereof represents a bad status. For example, since the mobile terminal of the terminal ID 300j illustrated in FIG. 4 represents the reception quality "d", the mobile terminal of the terminal ID 300j is requesting reception from any other base station (a multicast service non-support base station other than the base station 100a).

As described above, the mobile terminals of the terminal ID 300d to the terminal ID 300f are performing the multicast communication. Since the reception quality of the mobile terminal of 300d is "a", it is not necessary to perform switching to the unicast communication. However, since the reception quality of the mobile terminal of 300f is "c", it is desirable to perform switching to the unicast communication.

Further, the mobile terminals of the terminal ID 300g to the terminal ID 300i are performing the unicast communication. Since the reception quality of the mobile terminal of 300g is "a", it is not necessary to perform switching of communication due to the reception quality. However, since the reception quality of the mobile terminal of 300i is "c", it is desirable to perform switching to the multicast communication.

Further, since the mobile terminal of the terminal ID 300j is requesting reception through a base station different from the base station 100a, it is desirable to perform a hand-over (HO) to any other base station.

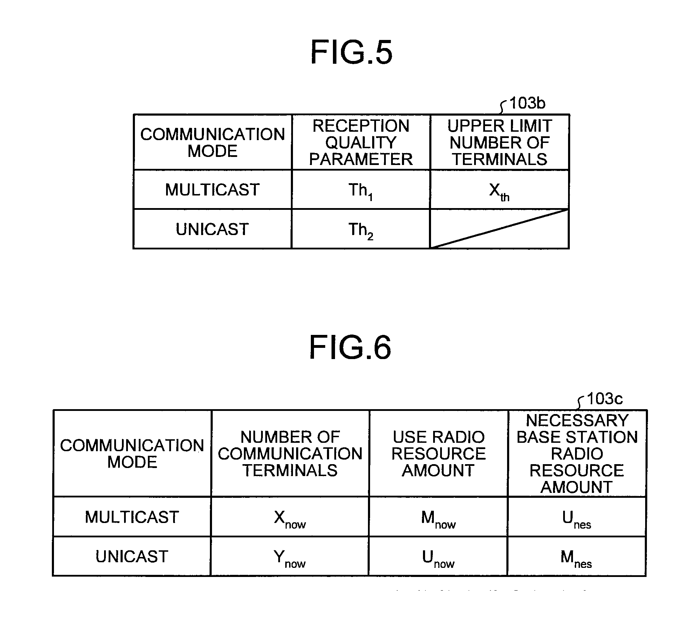

FIG. 5 is a diagram illustrating an example of the reception quality management table. As illustrated in FIG. 5, the reception quality management table 103b is a means for storing a "communication mode" representing the unicast communication or the multicast communication, a "reception quality parameter", and an "upper limit number of terminals".

The reception quality parameter represents a value that is set according to the reception quality of each mobile terminal that is performing the multicast communication or the unicast communication. The reception quality parameter is a value referred by a communication determination unit 104a, which will be described later, when determining switching of the communication mode.

For example, if the administrator of the base station 100a sets a total number (10) of mobile terminals in which the terminal status is the "MCH status" and the reception quality is "c" as a threshold in the terminal information management table 103a (see FIG. 4), the reception quality "$Th_1$" is "10".

Meanwhile, "$Th_2$" represents the reception quality that indicates the "DCH status" illustrated in the terminal information management table 103a. If a case in which the reception quality is "c" is set as "$Th_2$", the reception quality "c" is "$Th_2$".

Further, both of the mobile terminal representing "b" and the mobile terminal representing "c" may be set as "$Th_2$", and the mobile terminals representing "a" to "c" may be also set as "$Th_2$".

For example, the "upper limit number of terminals" represents a threshold previously set by the administrator of the base station 100a and represents the number of mobile terminals that are allowed by the base station 100a to perform the unicast communication. "$X_{th}$" represents the number of mobile terminals allowed when switching from the multicast communication to the unicast communication has been performed.

FIG. 6 is a diagram illustrating an example of the radio resource management table. As illustrated in FIG. 6, the radio resource management table 103c is a means for storing a "communication mode" representing the unicast communication or the multicast communication, the "number of communication terminals", a "use radio resource amount", and a "necessary base station radio resource amount".

The "number of communication terminals" represents the number of mobile terminals that are performing the unicast communication or the multicast communication. Specifically, since "$X_{now}$" represents a total number of "MCHs" set to the "terminal status" illustrated in the terminal information management table 103a, it represents the number of terminals that are performing the multicast communication.

Meanwhile, since "$Y_{now}$" represents a total number of "DCHs" set to the "terminal status" illustrated in the terminal information management table 103a, it represents the number of terminals that are performing the unicast communication.

The "use radio resource amount" represents a value of the radio resource that is being used between each mobile terminal and the base station 100a. "$M_{now}$" represents a radio resource amount that is being used by the number of terminals "$X_{now}$" that are performing the multicast communication. "$U_{now}$" represents a radio resource amount that is being used by the number of terminals "$Y_{now}$" that are performing the unicast communication.

The "necessary base station radio resource amount" represents a radio resource amount of the base station that is required to switch to the multicast communication or to the unicast communication and represents a value that is calculated according to the number of terminals as switching targets by a radio resource calculation unit 104c.

Thus, "$U_{nes}$" represents the radio resource of the base station required when the unicast communication is performed by the number of terminals "$X_{now}$," and "$M_{nes}$" represents the radio resource of the base station required when the multicast communication is performed by the number of terminals "$Y_{now}$".

Next, returning back to FIG.3, the communication control unit 104 will be described. The communication control unit 104 is a means for performing a determination on switching of the communication mode performed with each mobile terminal with reference to information (FIGS. 4 to 6) stored in the storage unit 103, and for instructing switching of the communication mode.

The communication control unit 104 includes a communication determination unit 104a, a channel setting request unit 104b, a radio resource calculation unit 104c, a unicast switching instruction unit 104d, a multicast switching instruction unit 104e, and a radio resource control unit 104f.

The communication determination unit 104a is a means for performing a determination on switching to the multicast communication or the unicast communication with reference to the reception quality of each mobile terminal and the radio resource information that are stored in the storage unit 103.

When determining whether to switch the communication mode, the communication determination unit 104a performs a two-step determination using the "reception quality parameter" and the "upper limit number of terminals" stored in the reception quality management table 103b.

First, a case in which the communication determination unit 104a determines such that switching is performed from the multicast communication to the unicast communication based on the reception quality of each mobile terminal will be described. As an example, a described will be made in connection with a case in which the reception quality parameter "$Th_1$" illustrated in the reception quality management table 103b is the reception quality "c" and the total number of mobile terminals is set to "10".

For example, since the mobile terminal 300f illustrated in FIG. 4 has been performing the multicast communication at the reception quality "c", it is desirable to perform switching to the unicast communication. Further, since the reception qualities of the mobile terminals 300d and 300e are "a" and "b", respectively, it is unnecessary to perform switching to the unicast communication at those reception qualities.

However, it is also expected that either reception quality may change from "a" and "b" to "c" based on information representing a reception power measurement or a radio wave quality that the reception unit 101 periodically receives from the mobile terminal 300d or the mobile terminal 300e.

Similarly, there may be a mobile terminal having the reception quality "c" among mobile terminals of the mobile terminal 300j and the subsequent mobile terminals.
If the total number of mobile terminals having the reception quality "c" that is acquired by the communication determination unit 104a with reference to the terminal information management table 103a is equal to or more than "10" (the acquired number of mobile terminals of the reception quality "c" $\geq Th_1$), the communication determination unit 104a may regard it as an opportunity to perform switching from the multicast communication to the unicast communication.

However, if the number of reception qualities "c" acquired by the communication determination unit 104a is less than "10" ((the acquired number of mobile terminals of the reception quality "c") < $Th_1$), the communication determination unit 104a does not regard it as an opportunity to perform switching from the multicast communication to the unicast communication.

Further, if switching from the multicast communication to the unicast communication is performed, a lot of radio resource is used. Thus, if only the reception quality is emphasized, the radio resource of the base station 100a may be exhausted.

Thus, if the communication determination unit 104a determines that the acquired number of mobile terminals having the reception quality "c" is less than $X_{th}$ (the acquired number of mobile terminals having the reception quality "c" < $X_{th}$) with reference to the upper limit number of terminals $X_{th}$ illustrated in the reception quality management table 103b, the communication determination unit 104a determines that it is possible to perform switching to the unicast communication and it is necessary to perform switching from the multicast communication to the unicast communication.

However, if the number of mobile terminals having the reception quality "c" is equal to or more than $X_{th}$ (the number of mobile terminals having the reception quality "c" $\geq X_{th}$), the communication determination unit 104a determines that it is unnecessary to perform switching from the multicast communication to the unicast communication.

Specifically, a description will be made in detail in connection with a case in which the reception quality parameter "$Th_1$" is the reception quality "c", the total number of such mobile terminals is "10", and the upper limit number of terminals "$X_{th}$" is "20".

In the case in which it is determined that the terminal status is "MCH" and the total number of reception qualities "c" thereof is "5" based on information representing the reception power measurement or the radio wave quality that the reception unit 101 periodically receives from each mobile terminal, the acquired number of mobile terminals having the reception quality "c" is less than the reception quality parameter (the acquired number of mobile terminals having the reception quality "c" < $Th_1$). Thus, the communication determination unit 104a does not regard it as an opportunity to perform switching from the multicast communication to the unicast communication.

Meanwhile, in the case in which the terminal status is "MCH" and the total number of reception qualities "c" thereof is "15," the acquired number of mobile terminals having the reception quality "c" is equal to more than the reception quality parameter (the acquired number of mobile terminals having the reception quality "c" $\geq Th_1$). Thus, the communication determination unit 104a regards it as an opportunity to perform switching from the multicast communication to the unicast communication.

Subsequently, since the number of mobile terminals having the reception quality "c" acquired by the communication determination unit 104a is "15", the number of mobile terminals having the reception quality "c" is less than the upper limit number of terminals "$X_{th}$" (=20)(the acquired number of mobile terminals having the reception quality "c" < $X_{th}$). Thus, since it is possible to perform switching to the unicast communication, the communication determination unit 104a determines that switching from the multicast communication to the unicast communication is necessary.

Meanwhile, if the terminal status is "MCH" and the total number of reception qualities "c" thereof is "30", the acquired number of mobile terminals having the reception quality "c" is equal to or more than the reception quality parameter (the acquired number of mobile terminals having the reception quality "c" $\geq Th_1$). Thus, the communication determination unit 104a regards it as an opportunity to perform switching from the multicast communication to the unicast communication.

Subsequently, since the number of mobile terminals having the reception quality "c" acquired by the communication determination unit 104a is "30", the number of mobile terminals having the reception quality "c" is equal to or more than the upper limit number of terminals "$X_{th}$" (=20)(the acquired number of mobile terminals having the reception quality "c" $\geq X_{th}$). In this case, if switching to the unicast communication is performed on all of the 30 mobile terminals, since the number of mobile terminals of the unicast communication exceeds the allowable number, it is determined that switching from the multicast communication to the unicast communication is unnecessary.

The total number of mobile terminals having the reception quality "c" has been described above as "$Th_1$", but if the reception quality is emphasized, "$Th_1$" may be set based on the number of mobile terminals having the reception quality "b" as well as the number of mobile terminals having the reception quality "c" and used to determine an opportunity to perform switching of the communication mode.

For example, by setting a case in which a total number of the mobiles having the reception quality "b" and the mobile terminals having the reception quality "c" is "10" as $Th_1$, the communication determination unit 104a may use it as an opportunity to perform switching from the multicast communication to the unicast communication.

In this case, since the reception quality of the mobile terminal 300e illustrated in FIG. 4 is "b", it is not necessary to perform switching from the multicast communication to the unicast communication when the number of mobile terminals having the reception quality "c" is a target. However, if the reception quality is further emphasized and thus the number of terminals including the number of mobile terminals having the reception quality "b" as well as the reception quality "c" is a target to set "$Th_1$", the mobile terminal 300e also becomes a target of switching.

Meanwhile, if the effectiveness of the radio resource is emphasized, by setting the upper limit number of terminals "$X_{th}$" to a larger value, the number of mobile terminals that perform the multicast communication can increase. For example, in the above described example, if "$X_{th}$" is set to "50", a case, in which the number of reception qualities "c" is "30", also becomes a target of switching from the multicast communication to the unicast communication.

Next, a description will be made in connection with a case in which the communication determination unit 104a determines switching from the unicast communication to the multicast communication based on the reception quality of each mobile terminal. As an example, it is assumed that the reception quality parameter "$Th_2$" illustrated in the reception quality management table 103b is "c".

In this case, if the communication determination unit 104a refers to the mobile terminals of which the reception quality represents "c" among the mobile terminals of the "DCH status" in the terminal information management table 103a, the communication determination unit 104a determines that switching from the unicast communication to the multicast communication is necessary. In this case, for example, the mobile terminal 300i may become a target of switching.

If priority is given only to the effectiveness of the radio resource, the mobile terminal having the reception quality "a" and the mobile terminal having the reception quality "b" (for example, the mobile terminal 300g and the mobile terminal 300h) may be included in "$Th_2$" as a target of switching from the unicast communication to the multicast communication.

Next, a switching determination for a case where each mobile requests a hand-over with respect to a base station that does not support the multicast service (for example, a base station 110a (not illustrated)) will be described.

If the communication determination unit 104a refers to the reception quality "d" in the terminal information management table 103a, the communication determination unit 104a determines that switching from the multicast communication to the unicast communication is necessary. By using a switching function from the multicast to the unicast, each mobile terminal (for example, the mobile terminal 300j) is handed over to the base station that does not support the multicast service while continuously receiving the multicast content data.

In the present embodiment, by changing the transport channel without changing the logical channel, switching to the unicast communication is performed. Thus, even the base station that does not support the multicast service needs to be a base station having the present switching function.

Subsequently, a description will be made in connection with a case in which the communication determination unit 104a determines switching of the communication mode in the case in which the number of mobile terminals that are performing the multicast communication is reduced. For example, in the case in which the number of mobile terminals that are performing the multicast communication is equal to or less than a predetermined number, if multicast transmission stops and switching to unicast transmission is performed, the use amount of the radio resource of the base station 100a decreases, and thus the use efficiency of the radio resource improves.

Specifically, the communication determination unit 104a acquires "$U_{now}$" (that represents the radio resource amount used by each mobile that is performing the unicast communication) or "$M_{now}$" (that represents the radio resource amount used by each mobile that is performing the multicast communication) stored in the radio resource management table 103c. "$U_{now}$" or "$M_{now}$" is data that is calculated and registered by the radio resource calculation unit 104b which will be described later.

If "$M_{now}$" acquired from the radio resource management table 103c is less than "$U_{nes}$" that is calculated and registered in the same table by the radio resource calculation unit 104b which will be described later ($M_{now} < U_{nes}$), since the unicast communication is performed at the radio resource amount that exceeds the radio resource amount used by the current multicast communication, the communication determination unit 104a determines that switching from the multicast communication to the unicast communication is unnecessary.

Meanwhile, if "$M_{now}$" acquired is equal to or more than "$U_{nes}$" ($M_{now} \geq U_{nes}$), since the unicast communication can be performed at the radio resource amount equal to or less than the radio resource amount used by the current multicast communication, the communication determination unit 104a determines that switching from the multicast communication to the unicast communication is necessary.

If "$U_{now}$" is larger than "$M_{nes}$" ($Unow > M_{nes}$), since the multicast communication can be performed at the radio resource amount smaller than the radio resource amount used by the current unicast communication, the communication determination unit 104a determines that switching from the unicast communication to the multicast communication is necessary.

Meanwhile, the communication determination unit 104a compares acquired "$U_{now}$" with "$M_{nes}$". If "$U_{now}$" is equal to or less than "$M_{nes}$" ($U_{now} \leq M_{nes}$), since the multicast communication is performed at the radio resource amount equal to or more than the radio resource amount used by the current unicast communication, the communication determination unit 104a determines that switching from the unicast communication to the multicast communication is unnecessary.

As such, in the case in which the number of mobile terminals that are performing the multicast communication is equal to or less than a predetermined number, the communication determination unit 104a can prevent the necessary radio resource amount of the whole base station 100a from being reversed in the multicast communication and the unicast communication.

Meanwhile, in the case in which the number of mobile terminals that are performing the unicast communication becomes equal to or less than a predetermined number during the unicast communication and the radio resource amount that is necessary during the unicast communication becomes larger than the radio resource amount at which the multicast communication is performed, switching from the unicast communication to the multicast communication is performed, so that the efficiency of the radio resource can improve.

As described above, since the communication determination unit 104a determines switching of the communication mode based on the reception quality or the effectiveness of the radio resource, a trade-off allowable range between the reception quality of each mobile terminal and the effectiveness of the radio resource can be set.

Subsequently, the channel setting request unit 104b will be described. The channel setting request unit 104b requests each mobile terminal to set the unicast transport channel to which the multicast content data is allocated when the communication determination unit 104a determines that switching from the multicast communication to the unicast communication is necessary.

For example, in FIG. 4, in the case in which switching from the multicast communication to the unicast communication is performed on the mobile terminal 300f, a channel setting request representing that multicast content data is to be transmitted through the transport CH#3 is made on the mobile terminal 300f.

Meanwhile, in FIG. 4, in the case in which switching from the unicast communication to the multicast communication is performed on the mobile terminal 300i, a channel setting request representing that multicast content data is to be transmitted through the transport CH#2 is made on the mobile terminal 300i.

Next, the radio resource calculation unit 104c will be described. The radio resource calculation unit 104c is a means for calculating the use radio resource amount or the necessary base station radio resource amount according to the number of mobile terminals and the communication mode thereof managed by the terminal information management table 103a.

First, the radio resource calculation unit 104c calculates "$U_{now}$" that represents the radio resource amount used by each mobile that is performing the unicast communication or "$M_{now}$" that represents the radio resource amount used by-each mobile that is performing the multicast communication with reference to the "modulation scheme" of each mobile terminal stored in the terminal information management table 103a and registers "$U_{now}$" or "$M_{now}$" to the radio resource management table 103c.

The radio resource calculation unit 104c calculates the necessary base station radio resource amount using the following calculation formula and registers the necessary base station radio resource amount to the radio resource management table 103c.

Generally, the necessary radio resource amount for the multicast communication and the unicast communication is calculated by the product of a communication rate depending on a difference in a modulation scheme and a communication volume and is defined by Formula (1) as follows.

Formula (1): necessary radio resource amount = (reciprocal of communication rate by modulation scheme) x (necessary communication band) x K(constant)

According to Formula (1), in the case of the multicast communication, since the modulation scheme is fixed, the necessary radio resource amount is in proportion to the amount of multicast content data. However, in the case of the unicast communication, since it is possible to change the modulation scheme according to the radio wave quality, the necessary radio resource amount is in proportion to the communication quality and the amount of multicast content data.

Further, if the number of mobile terminals that receive the multicast content data is taken into consideration in Formula (1), the radio resource necessary for the whole base station is defined by Formula (2) in the case of the multicast communication and is defined by Formula (3) in the case of the unicast communication.

A necessary radio resource calculation formula (2) in the multicast communication:

$$
\texttt{Necessary base station radio resource amount} = 1 \times
$$
$$
\texttt{reciprocal of communication rate by modulation scheme} \times
$$
$$
\texttt{necessary communication band} \times \texttt{K(constant)}
$$

A necessary radio resource calculation formula (3) in the unicast communication:

$$
\texttt{Necessary base station radio resource amount} =
$$
$$
\Sigma \{\texttt{reciprocal of communication rate by modulation scheme}\} \times
$$
$$
\texttt{necessary communication band} \times \texttt{K(constant)}
$$

Thus, if the necessary base station radio resource amount of the multicast communication is compared with the necessary base station radio resource amount of the unicast communication, there is a case in which the multicast communication is reversed due to $\Sigma$ {reciprocal of communication rate by modulation scheme}. Here, $\Sigma$ {reciprocal of communication rate by modulation scheme} represents the sum of "reciprocal of communication rate by modulation scheme" of each mobile terminal.

As described above, the radio resource calculation unit 104c acquires the "modulation scheme" stored in the terminal information management table 103a and "the number of terminals" stored in the radio resource management table 103c and calculates the necessary base station radio resource amounts "$U_{nes}$" and "$M_{nes}$" by Formula (2) and Formula (3), respectively.

The radio resource calculation unit 104c registers the calculated necessary base station radio resource amounts "$U_{nes}$" and "$M_{nes}$" to the radio resource management table 103c.

The unicast switching instruction unit 104d instructs the baseband processing unit 105 to perform switching from the multicast communication to the unicast communication when the communication determination unit 104a determines that switching from the multicast communication to the unicast communication is necessary.

The multicast switching instruction unit 105e instructs the baseband processing unit 105 to perform switching from the unicast communication to the multicast communication when the communication determination unit 104a determines that switching from the unicast communication to the multicast communication is necessary.

The radio resource control unit 104f updates the "type" and the "CH status" of each transport CH# of the terminal information management table 103a based on release of the transport channel or a notice from the baseband processing unit 105.

First, release of the transport channel will be described. For example, in the case in which the multicast communication has been switched to the unicast communication by the determination of the communication determination unit 104a, since the multicast transport channel is not used, the baseband processing unit 105 makes the multicast transport channel free so that the base station 100a can use the multicast transport channel as another radio resource.

Thus, in the case in which the unicast switching instruction unit 104d instructs all of the mobile terminals to be switched to the unicast communication and all of the mobile terminals are switched to the unicast communication, the radio resource control unit 104f releases the multicast transport channel of all of the mobile terminals (for example, the transport CH#2 illustrated in the terminal information management table 103a). As a result, the base station 100a can utilize the multicast transport channel as another radio resource.

Meanwhile, in the case in which the multicast switching instruction unit 104e instructs each mobile terminal to be switched to the multicast communication and the corresponding mobile terminal is switched to the multicast communication, the radio resource control unit 104f releases the unicast transport channel of each mobile terminal (for example, the transport CH#3 illustrated in the terminal information management table 103a). As a result, the base station 100a can utilize the unicast transport channel as another radio resource.

The radio resource control unit 104f updates the "type" and the "CH status" of each of the transport CH#1 to the transport CH#N of the terminal information management table 103a based information notified from the baseband processing unit 105.

The baseband processing unit 105 is a means for executing a switching process of the multicast communication and the unicast communication in response to the instruction from the unicast switching instruction unit 104d or the multicast switching instruction unit 104e only between each mobile terminal and the base station 100a.

The baseband processing unit 105 is also a means for performing processes including decision of timing for transmitting a packet to the mobile terminal 300a and a HO process of a received packet, and for outputting a packet to be transmitted to each mobile terminal to the radio unit 106.

The baseband processing unit 105 includes a media access control (MAC) processing unit 105a, a scheduler unit 105b, and a HO processing unit 105c.

The MAC processing unit 105a is a means having a Logical channel of each mobile terminal and performs establishment of a new logical channel between each mobile terminal and the base station 100a and conversion of a transport channel in the established logical channel.

The MAC processing unit 105a includes a logical channel unit 115a, a logical channel establishment unit 115b, a transport channel conversion unit 115c, and a channel information notification unit 115d.

The logical channel unit 115a is a means for performing a connection process of a virtual line between the base station 100a and each mobile terminal. The multicast content data to be transmitted from the core network 200 to the MAC processing unit 105a is transmitted through the virtual line.

The core network 200 transmits the multicast content data to the virtual line regardless of the multicast communication and the unicast communication. Thus, the logical channel unit 115a performs the connection process of the virtual line on the multicast content data between the base station 100a and each mobile terminal regardless of the communication mode.

The logical channel establishment unit 115b is a means for newly establishing the logical channel unit 115a between each mobile terminal and the base station 100a in response to the multicast switching instruction from the multicast switching instruction unit 104e or the unicast switching instruction from the unicast switching instruction unit 104d. By newly establishing the logical channel unit 115a through the logical channel establishment unit 115b, the virtual line between the base station 100a and each mobile terminal is newly established.

The transport channel conversion unit 115c is a means for converting the transport channel of the new logical channel unit 115a established by the logical channel establishment unit 115b to the multicast transport channel or the unicast transport channel.

Specifically, when the logical channel establishment unit 115b has newly established the logical channel unit 115a, for example, between the mobile terminal 300f (see FIG. 4) and the base station 100a in response to the instruction from the unicast switching instruction unit 104d, the transport channel conversion unit 115c converts the transport channel of the newly established logical channel unit 115a from the multicast transport channel to the unicast transport channel (for example, the transport CH#3: see FIG. 4).

The base station 100a and the mobile terminal 300f can perform the unicast communication through the newly established logical channel unit 115a, and the multicast content data starts to be transmitted to the mobile terminal 300f through the set unicast transport channel.

Thus, the mobile terminal 300f and the base station 100a temporarily become a state capable of simultaneously performing the multicast communication and the unicast communication, but if reception normally starts through the unicast transport channel, the mobile terminal 300f stops receiving data through the multicast transport channel.

**EP 2 362 705 A1**

Meanwhile, in the case in which the logical channel establishment unit 115b has newly established the logical channel unit 115a of the mobile terminal 300i, as an example, in response to the instruction from the multicast switching instruction unit 104d, the transport channel of the newly established logical channel unit 115a is converted from the unicast transport channel to the multicast transport channel (for example, the transport CH#2: see FIG. 4).

The multicast communication becomes possible through the newly established logical channel unit 115a, and the multicast content data starts to be transmitted to the mobile terminal 300f through the set multicast transport channel.

At this time, the mobile terminal 300i executes a reception setting of the multicast transport channel, and thus the multicast communication and the unicast communication can be temporarily simultaneously performed.

Thus, the transport channel conversion unit 115c stops transmission on the unicast transport channel when a channel setting completion notice of the multicast communication is received from the mobile terminal 300i.

As a result, the unicast communication between the base station 100a and the mobile terminal 300a is finished, and only the multicast communication is performed. Further, in the logical channel unit 115a, transmission of the multicast content data through the unicast transport channel of the mobile terminal 300i stops.

The channel information notification unit 115d is a means for reporting information of the transport channel converted by the transport channel conversion unit 115c to the radio resource control unit 104f.

The scheduler unit 105b is a means for performing scheduling of timing of a packet to be output to the radio unit 106 and performing an output based on the scheduling result.

The HO processing unit 105c is a means for handing the mobile terminal 300j over to a base station 110b in response to an instruction from the communication determination unit 104a while continuously receiving the multicast content data of a predetermined mobile terminal (for example, the mobile terminal 300j). The base station 110b represents a base station that does not support the multicast service performed by the base station 100a.

The radio unit 106 is a means for performing radio transmission of a packet to each mobile terminal through a transceiving antenna (for example, the antenna 150a: see FIG. 1).

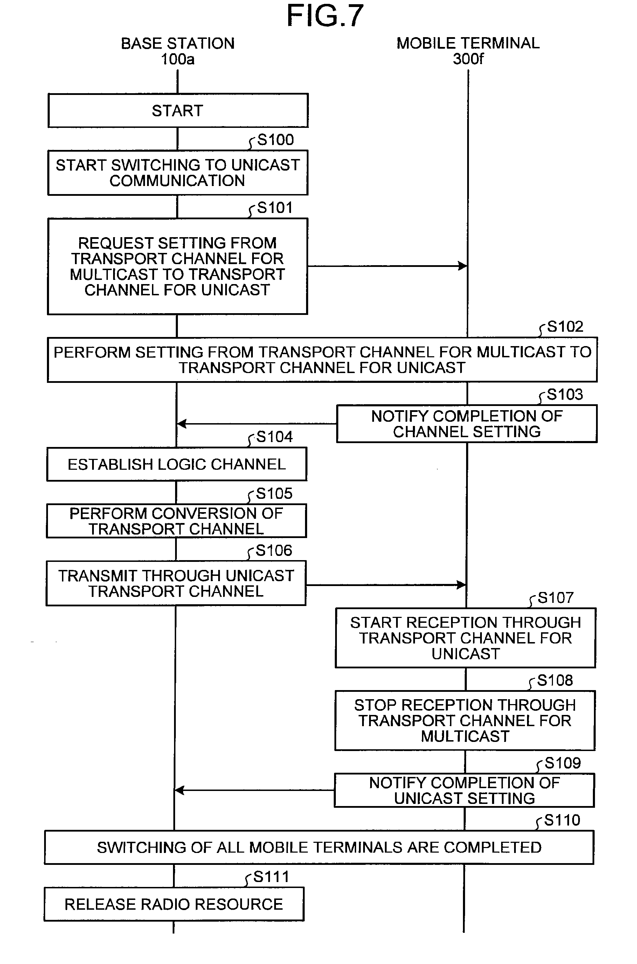

Next, a switching sequence to the unicast communication will be described. FIG. 7 is a switching sequence to the unicast communication. FIG. 7 illustrates a sequence in which the base station 100a switches communication of the mobile terminal 300f among a plurality of mobile terminals to the unicast communication.

In FIG. 7, when the communication determination unit 104a determines that switching from the multicast communication to the unicast communication is necessary, switching to the unicast communication starts (step S100).

Next, the channel setting request unit 104b requests the mobile terminal 300f to set the unicast transport channel (for example, the transport CH#3: see FIG. 4) allocated for the multicast content (step S101).

Further, in step S101, it is assumed that the base station 100a is performing the multicast communication with the mobile terminal 300f, and at that time, the transport channel is, for example, the transport CH#3 (see FIG. 4).

Next, setting of the unicast transport channel is performed between the base station 100a and the mobile terminal 300f by a conventional technique (step S102), and the mobile terminal 300f transmits a setting completion notice of the unicast transport channel to the base station 100a (step S103).

Next, the logical channel establishment unit 115b establishes the logical channel unit 115a (step S104), and the transport channel conversion unit 115c converts the transport channel of the newly established logical channel unit 115a to the transport CH#3 (step S105).

Thereafter, the base station 100a starts to transmit the multicast content data to the mobile terminal 300f through the set unicast transport channel (step S106).

The mobile terminal 300f starts to receive the multicast content data through the unicast transport channel (step S107). At this time, the mobile terminal 300f temporarily becomes a state capable of simultaneously performing the multicast communication and the unicast communication.

The mobile terminal 300f stops reception through the multicast transport channel when the reception start of the multicast content data is normally performed through the unicast transport channel (step S108).

The mobile terminal 300f transmits a setting completion notice of the unicast communication to the base station 100a (step S109).

Thereafter, for example, when switching from the multicast communication to the unicast communication has been completed on all of the mobile terminals (for examples, the mobile terminals 300a to 300z) including the mobile terminal 300f that is receiving the multicast content (step S110), the radio resource control unit 104f releases the multicast transport channel (step S111), and thus the multicast communication is finished. Only the unicast communication is performed between the base station 100a and all of the mobile terminals.

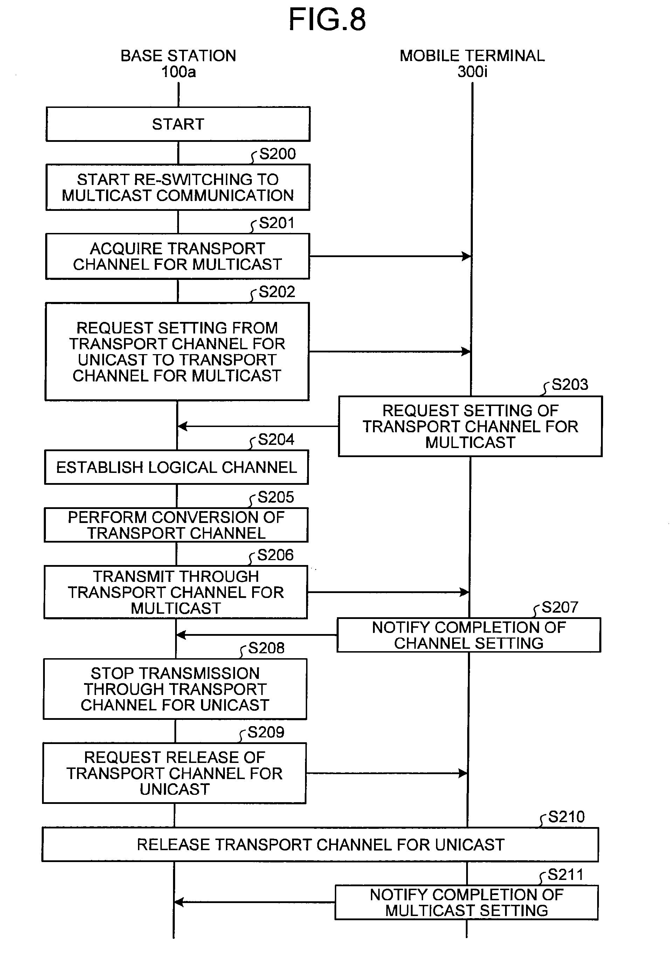

Next, a re-switching sequence to the multicast communication will be described. FIG. 8 is a re-switching sequence to the multicast communication. FIG. 8 illustrates a sequence in which the base station 100a re-switches the mobile terminal 300i among a plurality of mobile terminals to the multicast communication.

First, when the communication determination unit 104a determines that switching from the unicast communication to the multicast communication is necessary, the base station 100a starts re-switching to the multicast communication (step S200).

14

Next, the base station 100a acquires a multicast radio resource (for example, the transport CH#2) by a conventional technique (step S201), and the channel setting request unit 104b requests setting for allocating the multicast content to the acquired transport channel (step S202).

Further, in step S202, it is assumed that the base station 100a is performing the unicast communication with the mobile terminal 300i, and at that time, the transport channel is, for example, the transport CH#3 (see FIG. 4).

Next, the mobile terminal 300i transmits a setting request of the multicast transport channel (step S203). The logical channel establishment unit 115b newly establishes the logical channel unit 115a (step S204).

Next, the transport channel conversion unit 115c converts the transport channel of the established logical channel unit 115a to the multicast transport CH#2 (step S205).

The base station 100a starts transmission through the multicast transport channel (step S206), and a setting completion notice of the multicast transport channel is transmitted to the base station 100a (step S207).

Thereafter, the transport channel conversion unit 115c stops transmitting the multicast content data through the unicast transport channel (the transport CH#3) (step S208). Thereafter, the base station 100a requests release of the unicast radio channel (step S209).

Opening of the unicast radio channel is performed between the base station 100a and the mobile terminal 300i (step S210), and the mobile terminal 300i notifies the base station 100a of the fact that setting of the multicast communication has been completed (step S211).

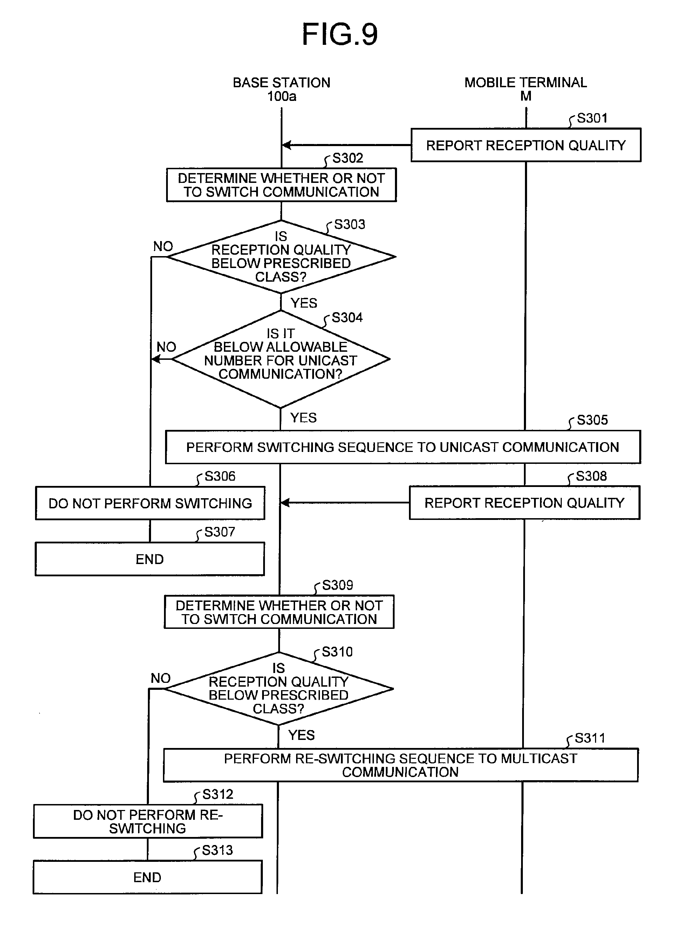

Next, a switching sequence in the case in which the reception quality degrades will be described. FIG. 9 is a switching sequence in the case in which the reception quality degrades. FIG. 9 illustrates a switching sequence performed by the base station 100a in the case in which the reception quality of a mobile terminal M degrades.

In FIG. 9, the mobile terminal first reports the reception quality to the base station 100a (step S301). The communication determination unit 104a determines whether or not communication switching is necessary based on the received reception quality (step S302).

Next, after the communication determination unit 104a determines that the reception quality does not satisfy a prescribed class (Yes in step S303), when the number of mobile terminals that are a switching target is compared to an allowable number in the case in which switching to the unicast communication is performed, if the number of mobile terminals is less than the allowable number (Yes in step S304), the switching sequence to the unicast communication of step S101 to step S109 illustrated in FIG. 7 starts (step S305).

Meanwhile, when it is determined that the reception quality satisfies the prescribed class (No in step S303), the communication determination unit 104a finishes the process without performing switching of communication (step S306 and step S307).

Further, when the number of mobile terminals that are a switching target is compared to the allowable number in the case in which switching to the unicast communication is performed, if the number of mobile terminals exceeds the allowable number (No in step S304), the communication determination unit 104a finishes the process without performing switching of communication (step S306 and step S307).

Subsequently, after switching to the unicast communication is performed, the mobile terminal M reports the reception quality again (step S308). The communication determination unit 104a determines whether or not switching of communication is necessary based on the received reception quality (step S309).

Next, when the communication determination unit 104a determines that the reception quality does not satisfy a prescribed class (Yes in step S310), the re-switching sequence to the multicast communication of step S201 to step S211 illustrated in FIG. 8 starts (step S311).

Meanwhile, when the communication determination unit 104a determines that the reception quality satisfies the prescribed class (No in step S303), re-switching of communication is not performed, and the process finishes (step S312 and step S313).

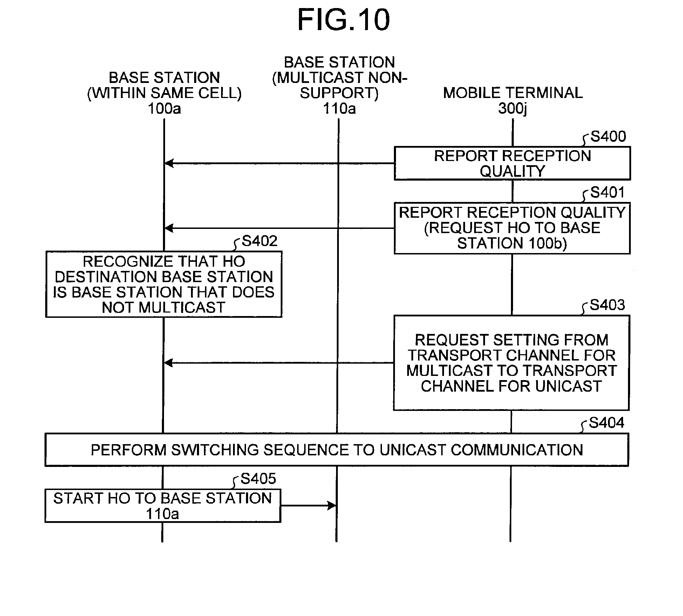

Next, a switching sequence in which the base station 100a performs the hand-over will be described. FIG. 10 is a sequence representing a hand-over to another base station (for example, a base station 110a (not illustrated)). FIG. 10 illustrates a sequence in which the base station 100a hands the mobile terminal 300j among a plurality of mobile terminals over to the multicast non-support base station 110a.

As illustrated in FIG. 4, the mobile terminal 300j reports the reception quality to the base station 100a (step S400). The mobile terminal 300j requests the hand-over to the base station 100a (step S401).

Next, the communication determination unit 104a recognizes that the mobile terminal 300a is requesting the hand-over to the multicast non-support base station 110a based on the received reception quality report (step S402).

Next, the mobile terminal 300j makes a setting request from the multicast transport channel to the unicast transport channel (step S403).

The base station 100a starts the switching sequence to the unicast communication of step S101 to step S109 illustrated in FIG. 7 (step S404). Thereafter, the HO processing unit 105c starts to hand the mobile terminal 300j over to the base station 110a (step S405).

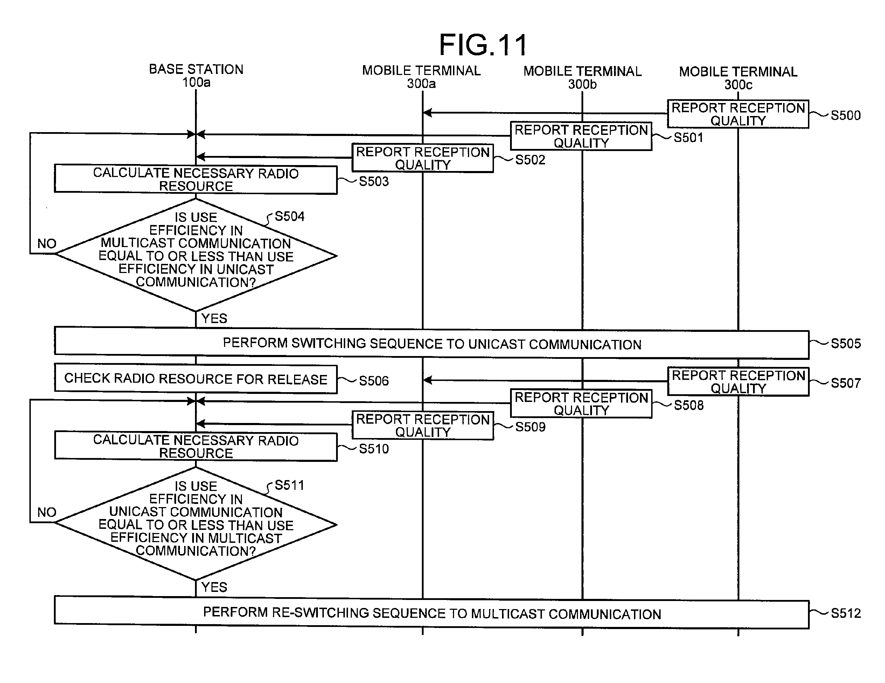

Next, a switching sequence, performed by the base station 100a, accompanied with a reduction in the number of terminals that are performing the multicast communication will be described. FIG. 11 is a switching sequence accompanied with a reduction in the number of terminals that are performing the multicast communication.

FIG. 11 illustrates a sequence in which the base station 100a performs switching to the unicast communication based on the reception quality from the mobile terminals 300a, 300b, and 300c among a plurality of mobile terminals.

As illustrated in FIG. 11, the mobile terminal 300a, the mobile terminal 300b, and the mobile terminal 300c report the reception quality to the base station 100a, respectively, (step S500, step S501, and step S502).

Next, the radio resource calculation unit 104c calculates the necessary radio resource amount in the case in which the mobile terminal 300a, the mobile terminal 300b, and the mobile terminal 300c perform the unicast communication (step S503).

Next, when the communication determination unit 104a determines that the radio use efficiency in the multicast communication is equal to or less than the use efficiency in the unicast communication based on the calculated radio resource (Yes in step S504), the MAC processing unit 105a starts the switching sequence to the unicast communication of step S101 to step S111 illustrated in FIG. 7 (step S505).

Thereafter, the radio resource control unit 104f checks whether or not the multicast transport channel of the mobile terminal 300a, the mobile terminal 300b, and the mobile terminal 300c has released (step S506).

Meanwhile, when the communication determination unit 104a determines that the radio use efficiency in the multicast communication is not equal to or less than the use efficiency in the unicast communication (No in step S504), the switching sequence to the unicast communication is not performed, and the process returns to step S500.

After switching from the multicast communication to the unicast communication is performed, the mobile terminal 300a, the mobile terminal 300b, and the mobile terminal 300c report the reception quality to the base station 100a again (step S507, step S508, and step S509).

Next, the radio resource calculation unit 104c calculates the necessary radio resource amount in the case in which the mobile terminal 300a, the mobile terminal 300b, and the mobile terminal 300c perform the multicast communication, based on each received reception quality report (step S510).

Next, when the communication determination unit 104a determines that the radio use efficiency in the unicast communication is equal to or less than the use efficiency in the multicast communication based on the calculated radio resource (Yes in step S511), the MAC processing unit 105a starts the re-switching sequence to the multicast communication of step S201 to step S211 illustrated in FIG. 8 (step S512).

Meanwhile, when the communication determination unit 104a determines that the radio use efficiency in the unicast communication is not equal to or less than the use efficiency in the multicast communication (No in step S511), the re-switching sequence is not performed, and the process returns to step S507.

As described above, by the switching the communication mode through the base station 100a according to the first present embodiment, switching of the multicast communication and the multicast communication between the mobile terminals can be limited between the base station 100a and each mobile terminal, and thus the ineffective use of the radio resource can be prevented.

Further, by limiting switching of the communication mode between the base station 100a and each mobile terminal, the base station 100a has only to receive only the multicast content from the core network 200, and switching of the multicast communication and the unicast communication needs not be performed between the base station 100a and the core network 200, whereby the radio resource accompanied with switching can be saved.

Further, since the base station 100a decides the communication mode, the base station 100a can optimize the allocation of the whole radio resource, for example, how to allocate its own radio resource to each mobile terminal.

In addition, since the base station performs switching of communication based on the reception quality information received from the mobile terminal, even if the reception quality of each mobile terminal changes while the mobile terminal receives the multicast content data, it is possible to switch the communication mode. Thus, the communication mode can be switched in real time in response to a change in reception quality of the mobile terminal.

All or part of the processes described as being automatically performed among the processes described in the present embodiment may be manually performed. Further, all or part of the processes described as being manually performed may be manually performed by a well-known method. Besides, it is possible to arbitrarily change a processing procedure, a control procedure, a concrete term, and information including various data which are described in this disclosure or the drawings except as otherwise set forth.

Further, the components of the base station 100a illustrated in FIG. 3 are functionally conceptual and need not be necessarily physically configured as illustrated in the drawing. That is, specific forms of dispersion/integration of the devices are not limited to those illustrated in the drawing, and all or part thereof may be functionally or physically dispersed or integrated in arbitrary units depending on various loads or use conditions. Furthermore, all or any part of processing functions performed in the device may be implemented by a central processing unit (CPU) and a program analyzed and executed by the CPU, or may be implemented as hardware by wired logic.

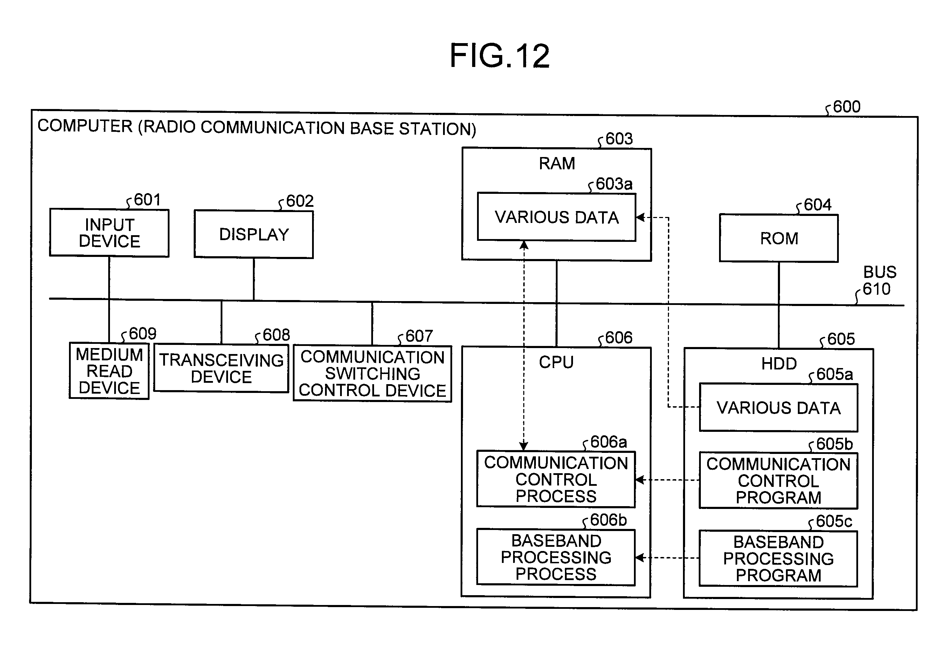

FIG. 12 is a diagram illustrating a hardware configuration that executes switching of the communication mode according to the first embodiment. As illustrated in FIG. 12, a computer 600 includes an input device 601, a display 602, a random access memory (RAM) 603, a read only memory (ROM) 604, a hard disk drive (HDD) 605, a CPU 606, a communication switching control device 607 that receives an instruction of the CPU 606 and controls switching of the communication mode, a transceiving device 608, and a medium read device 609, which are connected to one another via a bus 610.

A communication control program 605b that performs the same function as the communication control function and a baseband processing program 605c that performs the same function as the baseband processing function are stored. When the CPU 606 reads and executes the communication control program 605a, a communication control process 606a is activated, and when the baseband processing program 605b is read and executed, a baseband processing process 606b is activated. The communication control process 606a corresponds to the communication control unit 104 illustrated in FIG. 3, and the baseband processing process 606b corresponds to the baseband processing unit 105 illustrated in FIG. 3.

The HDD 605 stores various data 605a that corresponds to the terminal information management table 103a, the reception quality management table 103b, and the radio resource management table 103c illustrated in FIGS. 3 to 5. The CPU 606 reads the various data 605a, stores the various data 605a in the RAM 603, and performs the switching process of communication based on various data 603a stored in the RAM 603.

The communication control program 605b and the baseband processing program 605c illustrated in FIG. 12 need not be necessarily stored in the HDD 605 from the beginning stage. For example, the communication control program 605b and the baseband processing program 605c may be stored in a "transportable physical medium" such as a flexible disc (FD), a CD-ROM, a DVD disc, an optical disc, and an IC card which are inserted into a computer, a "fixing physical medium" such as a hard disc drive (HDD) disposed inside or outside a computer, or "any other computer (or a server)" connected to a computer via a public line, the Internet, a local area network (LAN), or a wide area network (WAN), and the communication control program 605b and the baseband processing program 605c may be read and executed by a computer.

## Claims

1. A radio communication apparatus, comprising:

   a determination unit that determines whether to perform switching from a first communication mode to a second communication mode based on communication information used in communication between a mobile terminal and a radio communication apparatus;
   a logical channel establishment unit that newly establishes a logical channel by using a first logical channel corresponding to the first communication mode as a second logical channel corresponding to the second communication mode, based on a determination result of the determination unit;
   a transport channel conversion unit that converts a transport channel of the second logical channel from a first transport channel corresponding to the first communication mode to a second transport channel corresponding to the second communication mode; and
   a communication switching unit that switches to the second communication mode using the second logical channel and the second transport channel.

2. The radio communication apparatus according to claim 1, wherein
   the communication information includes reception quality information representing a reception quality when the mobile terminal performs communication by the first communication mode or the second communication with the radio communication apparatus, and
   the determination unit performs a determination on switching from the first communication mode to the second communication mode based on the reception quality information.

3. The radio communication apparatus according to claim 1,
   wherein when switching from the first communication mode to the second communication mode is performed, the determination unit determines whether to switch a communication mode based on a radio resource in a case in which a communication mode is switched and a radio resource in a case in which a communication mode is not switched.

4. The radio communication apparatus according to claim 1, further comprising
   a hand-over unit that switches the radio communication apparatus to be connected with the mobile terminal in a state in which a communication mode is switched from the multicast communication mode to the unicast communication mode in the case in which the first communication mode is a multicast communication mode, the second communication mode is a unicast communication mode, and the mobile terminal gets out of a communication area in which a radio communication service with the radio communication apparatus is established and is performing communication with the radio communication apparatus in the multicast communication mode.

**5.** A radio communication system, comprising:

a mobile terminal; and
a radio communication apparatus that provides the mobile terminal with information through various communication modes,
wherein the radio communication apparatus includes
a determination unit that determines whether to perform switching from a first communication mode to a second communication mode based on communication information used in communication between the mobile terminal and the radio communication apparatus;
a logical channel establishment unit that newly establishes a logical channel by using a first logical channel corresponding to the first communication mode as a second logical channel corresponding to the second communication mode, based on a determination result of the determination unit;
a transport channel conversion unit that converts a transport channel of the second logical channel from a first transport channel corresponding to the first communication mode to a second transport channel corresponding to the second communication mode; and
a communication switching unit that switches to the second communication mode using the second logical channel and the second transport channel.

**6.** The radio communication system according to claim 5, wherein
the communication information includes reception quality information representing a reception quality when the mobile terminal performs communication by the first communication mode or the second communication with the radio communication apparatus, and
the determination unit performs a determination on switching from the first communication mode to the second communication mode based on the reception quality information.

**7.** The radio communication system according to claim 5,
wherein when switching from the first communication mode to the second communication mode is performed, the determination unit determines whether to switch a communication mode based on a radio resource in a case in which a communication mode is switched and a radio resource in a case in which a communication mode is not switched.

**8.** The radio communication system according to claim 5, further comprising
a hand-over unit that switches the radio communication apparatus to be connected with the mobile terminal in a state in which a communication mode is switched from the multicast communication mode to the unicast communication mode in the case in which the first communication mode is a multicast communication mode, the second communication mode is a unicast communication mode, and the mobile terminal gets out of a communication area in which a radio communication service with the radio communication apparatus is established and is performing communication with the radio communication apparatus in the multicast communication mode.

**9.** A method of switching a communication mode, comprising:

by a radio communication apparatus,
a communication information storage step of storing communication information used in communication between a mobile terminal and an own apparatus in a storage device;
a determination step of determining whether to perform switching from a first communication mode to a second communication mode based on the communication information stored in the storage device;
a logical channel establishment step of newly establishing a logical channel by using a first logical channel corresponding to the first communication mode as a second logical channel corresponding to the second communication mode, based on a determination result of the determination step;
a transport channel conversion step of converting a transport channel of the second logical channel from a first transport channel corresponding to the first communication mode to a second transport channel corresponding to the second communication mode; and
a communication switching step of switching to the second communication mode using the second logical channel and the second transport channel.

**10.** The method according to claim 9, wherein
the communication information includes reception quality information representing a reception quality when the mobile terminal performs communication by the first communication mode or the second communication with the radio communication apparatus, and
the determination step includes a determination on switching from the first communication mode to the second communication mode based on the reception quality information.

**11.** The method according to claim 9,
wherein the determination step includes determining, when switching from the first communication mode to the second communication mode is performed, whether to switch a communication mode based on a radio resource in a case in which a communication mode is switched and a radio resource in a case in which a communication mode is not switched.

**12.** The method according to claim 9, further comprising
a hand-over step of switching the radio communication apparatus to be connected with the mobile terminal in a state in which a communication mode is switched from the multicast communication mode to the unicast communication mode in the case in which the first communication mode is a multicast communication mode, the second communication mode is a unicast communication mode, and the mobile terminal gets out of a communication area in which a radio communication service with the radio communication apparatus is established and is performing communication with the radio communication apparatus in the multicast communication mode.

# FIG.1

# FIG.2

# FIG.3

# FIG.4

EP 2 362 705 A1

103a

| TERMI-NAL ID/CELL ID | TERMI-NAL STATUS | TRANSPORT CH#1 | | | | TRANSPORT CH#2 | | | | | TRANSPORT CH#3 | | | | | ... | TRANSPORT CH#N |
|---|---|---|---|---|---|---|---|---|---|---|---|---|---|---|---|---|---|
| | | TYPE | CH STATUS | MODU-LATION SCHEME | ... | TYPE | CH STATUS | MODU-LATION SCHEME | RECEP-TION QUAL-ITY | ... | TYPE | CH STATUS | MODU-LATION SCHEME | RECEP-TION QUAL-ITY | ... | ... | ... |
| 300a/CELL 50 | IDLE | - | - | - | - | - | - | - | - | - | - | - | - | - | - | ... | ... |
| 300b/CELL 50 | PCH STATUS | PCH | SETTING COM-PLETED | BPSK | ... | FACH | DURING SETTING | QPSK | - | ... | - | - | - | - | ... | ... | ... |
| 300c/CELL 50 | FACH STATUS | PCH | SETTING COM-PLETED | BPSK | ... | FACH | SETTING COM-PLETED | QPSK | b | ... | - | - | - | - | ... | ... | ... |
| 300d/CELL 50 | MCH STATUS | PCH | SETTING COM-PLETED | BPSK | ... | MCH | SETTING COM-PLETED | 16QAM | a | ... | - | - | - | - | ... | ... | ... |
| 300e/CELL 50 | MCH STATUS | PCH | SETTING COM-PLETED | BPSK | ... | MCH | SETTING COM-PLETED | 16QAM | b | ... | DCH | DURING SETTING | 16QAM | - | ... | ... | ... |
| 300f/CELL 50 | MCH STATUS | PCH | SETTING COM-PLETED | BPSK | ... | MCH | SETTING COM-PLETED | 16QAM | c | ... | DCH | DURING SETTING | 16QAM | - | ... | ... | ... |
| 300g/CELL 50 | DCH STATUS | PCH | SETTING COM-PLETED | BPSK | ... | MCH | DURING SETTING | 16QAM | - | ... | DCH | SETTING COM-PLETED | 64QAM | a | ... | ... | ... |
| 300h/CELL 50 | DCH STATUS | PCH | SETTING COM-PLETED | BPSK | ... | MCH | DURING SETTING | 16QAM | - | ... | DCH | SETTING COM-PLETED | 16QAM | b | ... | ... | ... |
| 300i/CELL 50 | DCH STATUS | PCH | SETTING COM-PLETED | BPSK | ... | MCH | DURING SETTING | 16QAM | - | ... | DCH | SETTING COM-PLETED | 16QAM | c | ... | ... | ... |
| 300j/CELL 50 | MCH STATUS | PCH | SETTING COM-PLETED | BPSK | ... | MCH | SETTING COM-PLETED | 16QAM | d | ... | - | - | - | - | ... | ... | ... |
| ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |
| 300z/CELL 50 | ... | ... | ... | ... | ... | ... | ... | ... | ... | ... | ... | ... | ... | ... | ... | ... | ... |

# FIG.5

103b

| COMMUNICATION MODE | RECEPTION QUALITY PARAMETER | UPPER LIMIT NUMBER OF TERMINALS |
|---|---|---|
| MULTICAST | $Th_1$ | $X_{th}$ |
| UNICAST | $Th_2$ | |

# FIG.6

103c

| COMMUNICATION MODE | NUMBER OF COMMUNICATION TERMINALS | USE RADIO RESOURCE AMOUNT | NECESSARY BASE STATION RADIO RESOURCE AMOUNT |
|---|---|---|---|
| MULTICAST | $X_{now}$ | $M_{now}$ | $U_{nes}$ |
| UNICAST | $Y_{now}$ | $U_{now}$ | $M_{nes}$ |

# FIG.7

BASE STATION
100a

MOBILE TERMINAL
300f

START

S100

START SWITCHING TO UNICAST
COMMUNICATION

S101

REQUEST SETTING FROM
TRANSPORT CHANNEL FOR
MULTICAST TO TRANSPORT
CHANNEL FOR UNICAST

S102

PERFORM SETTING FROM TRANSPORT CHANNEL FOR MULTICAST TO
TRANSPORT CHANNEL FOR UNICAST

S103

NOTIFY COMPLETION OF
CHANNEL SETTING

S104

ESTABLISH LOGIC CHANNEL

S105

PERFORM CONVERSION OF
TRANSPORT CHANNEL

S106

TRANSMIT THROUGH UNICAST
TRANSPORT CHANNEL

S107

START RECEPTION THROUGH
TRANSPORT CHANNEL FOR
UNICAST

S108

STOP RECEPTION THROUGH
TRANSPORT CHANNEL FOR
MULTICAST

S109

NOTIFY COMPLETION OF
UNICAST SETTING

S110

SWITCHING OF ALL MOBILE TERMINALS ARE COMPLETED

S111

RELEASE RADIO RESOURCE

EP 2 362 705 A1

# FIG.8

BASE STATION
100a

MOBILE TERMINAL
300i

START

S200

START RE-SWITCHING TO
MULTICAST COMMUNICATION

S201

ACQUIRE TRANSPORT
CHANNEL FOR MULTICAST

S202

REQUEST SETTING FROM
TRANSPORT CHANNEL FOR
UNICAST TO TRANSPORT
CHANNEL FOR MULTICAST

S203

REQUEST SETTING OF
TRANSPORT CHANNEL FOR
MULTICAST

S204

ESTABLISH LOGICAL CHANNEL

S205

PERFORM CONVERSION OF
TRANSPORT CHANNEL

S206

TRANSMIT THROUGH
TRANSPORT CHANNEL FOR
MULTICAST

S207

NOTIFY COMPLETION OF
CHANNEL SETTING

S208

STOP TRANSMISSION
THROUGH TRANSPORT
CHANNEL FOR UNICAST

S209

REQUEST RELEASE OF
TRANSPORT CHANNEL FOR
UNICAST

S210

RELEASE TRANSPORT CHANNEL FOR UNICAST

S211

NOTIFY COMPLETION OF
MULTICAST SETTING

26

# FIG.9

BASE STATION
100a

MOBILE TERMINAL
M

S301
REPORT RECEPTION QUALITY

S302
DETERMINE WHETHER OR NOT
TO SWITCH COMMUNICATION

S303
IS
RECEPTION QUALITY
BELOW PRESCRIBED
CLASS?

NO

YES

S304
IS IT
BELOW ALLOWABLE
NUMBER FOR UNICAST
COMMUNICATION?

NO

YES

S305
PERFORM SWITCHING SEQUENCE TO UNICAST COMMUNICATION

S306
DO NOT PERFORM SWITCHING

S308
REPORT RECEPTION QUALITY

S307
END

S309
DETERMINE WHETHER OR NOT
TO SWITCH COMMUNICATION

S310
IS
RECEPTION QUALITY
BELOW PRESCRIBED
CLASS?

NO

YES

S311
PERFORM RE-SWITCHING SEQUENCE TO MULTICAST
COMMUNICATION

S312
DO NOT PERFORM RE-
SWITCHING

S313
END

# FIG.10

```
BASE STATION          BASE STATION
(WITHIN SAME CELL)    (MULTICAST NON-        MOBILE TERMINAL
      100a             SUPPORT)                    300j
                         110a
```

⌐S400
REPORT RECEPTION
QUALITY

⌐S401
REPORT RECEPTION QUALITY
(REQUEST HO TO BASE
STATION 100b)

⌐S402
RECOGNIZE THAT HO
DESTINATION BASE STATION
IS BASE STATION THAT DOES
NOT MULTICAST

⌐S403
REQUEST SETTING FROM
TRANSPORT CHANNEL FOR
MULTICAST TO TRANSPORT
CHANNEL FOR UNICAST

⌐S404
PERFORM SWITCHING SEQUENCE TO UNICAST COMMUNICATION

⌐S405
START HO TO BASE STATION
110a

# FIG.11

EP 2 362 705 A1

# FIG.12

COMPUTER (RADIO COMMUNICATION BASE STATION) 600

RAM 603
VARIOUS DATA 603a

ROM 604

BUS 610

INPUT DEVICE 601

DISPLAY 602

MEDIUM READ DEVICE 609

TRANSCEIVING DEVICE 608

COMMUNICATION SWITCHING CONTROL DEVICE 607

CPU 606

COMMUNICATION CONTROL PROCESS 606a

BASEBAND PROCESSING PROCESS 606b

HDD 605
VARIOUS DATA 605a

COMMUNICATION CONTROL PROGRAM 605b

BASEBAND PROCESSING PROGRAM 605c

EP 2 362 705 A1

## INTERNATIONAL SEARCH REPORT

| International application No. |
|---|
| PCT/JP2008/071733 |

A. CLASSIFICATION OF SUBJECT MATTER
*H04W72/08*(2009.01)i, *H04W4/06*(2009.01)i

According to International Patent Classification (IPC) or to both national classification and IPC

B. FIELDS SEARCHED

Minimum documentation searched (classification system followed by classification symbols)
H04B7/24-7/26, H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-503153 A  (LG Electronics Inc.),<br>15 February, 2007 (15.02.07),<br>Par. Nos. [0002] to [0021]; Fig. 2<br>& US 2005/0041610 A1   & EP 1656808 A1<br>& WO 2005/018268 A1   & KR 5019561 A<br>& BR 413224 A         & CN 1839651 A<br>& ZA 600534 A | 1-12 |
| Y | JP 2008-503173 A  (LG Electronics Inc.),<br>31 January, 2008 (31.01.08),<br>Par. Nos. [0013] to [0015]<br>& US 2005/0286472 A1   & EP 1700405 A1<br>& WO 2005/122440 A1   & KR 5118592 A<br>& BR 506787 A         & CN 1914832 A<br>& ZA 607019 A | 1-12 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 January, 2009 (22.01.09) | 03 February, 2009 (03.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

Form PCT/ISA/210 (continuation of second sheet) (April 2007)

## INTERNATIONAL SEARCH REPORT

| International application No. |
|---|
| PCT/JP2008/071733 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2008/090661 A1  (NEC Corp.),<br>31 July, 2008 (31.07.08),<br>Par. Nos. [0003] to [0007]<br>(Family: none) | 2,6,10 |
| Y | WO 2008/129812 A1  (Panasonic Corp.),<br>30 October, 2008 (30.10.08),<br>Par. Nos. [0089] to [0106]; Fig. 18<br>(Family: none) | 4,8,12 |

**EP 2 362 705 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006333182 A